Europäisches Patentamt

European Patent Office

Office européen des brevets

(11) Publication number : **0 580 447 A1**

(12) **EUROPEAN PATENT APPLICATION**

(21) Application number : 93305828.1

(22) Date of filing : 23.07.93

(51) Int. Cl.[5] : **H01L 41/09**

(30) Priority : 24.07.92 JP 198601/92
20.05.93 JP 118809/93

(43) Date of publication of application :
26.01.94 Bulletin 94/04

(84) Designated Contracting States :
DE FR GB

(71) Applicant : SEIKO INSTRUMENTS INC.
31-1, Kameido 6-chome Koto-ku
Tokyo 136 (JP)

(72) Inventor : Inoue, Tatsunori, c/o Seiko
Instruments Inc.
31-1 Kameido 6-chome
Koto-ku, Tokyo (JP)
Inventor : Kasuga, Masao, c/o Seiko
Instruments Inc.
31-1 Kameido 6-chome
Koto-ku, Tokyo (JP)

Inventor : Suzuki, Kenji, c/o Seiko Instruments
Inc.
31-1 Kameido 6-chome
Koto-ku, Tokyo (JP)
Inventor : Ozawa, Fujio, c/o Seiko Instruments
Inc.
31-1 Kameido 6-chome
Koto-ku, Tokyo (JP)
Inventor : Yamazaki, Ko, c/o Seiko Instruments
Inc.
31-1 Kameido 6-chome
Koto-ku, Tokyo (JP)
Inventor : Hayashizaki,Shinichi, c/o Seiko
Instruments Inc.
31-1 Kameido 6-chome
Koto-ku, Tokyo (JP)
Inventor : Suzuki, Makoto, c/o Seiko
Instuments inc.
31-1 Kameido 6-chome
Koto-ku, Tokyo (JP)

(74) Representative : Sturt, Clifford Mark et al
J. Miller & Co. 34 Bedford Row Holborn
London WC1R 4JH (GB)

(54) **Ultrasonic motor and electronic apparatus equipped with ultrasonic motor.**

(57) An ultrasonic motor for stepwise driving a rotor 112, in which the stepping amount of the rotor is made smaller than the interval between nodes of a standing wave, or the stepwise movement of the nodes thereof. An ultrasonic vibration generating circuit 107 includes a circuit 106 to generate a travelling wave used to rotate the rotor 112 and a circuit 105 to generate a standing wave used to stop rotation of the rotor.

A power source 101 drives an oscillating circuit 102 whose output is divided in a circuit 103 and supplied to a timing pulse generating circuit 104. The output of circuit 104 is to a switching circuit 108 which controls the selection of input from the ultrasonic vibration generating circuit 107 to output to a piezoelectric vibrator drive circuit 109 which energises a piezoelectric vibrator 110. Ultrasonic vibrations are produced at a vibrator member 111, secured to the vibrator 110 and having a plurality of comb-like projection portions. The rotor 112 has a number of poles which is greater than the number of nodes when the standing wave is generated. The rotor 112 is pressed into engagement with the vibrator member 111 and is subject to rotation by the travelling wave and stopping by the standing wave. The rotor is stopped at a force balanced position, depending on the positions of the poles of the rotor, the positions of the nodes of the standing wave, and the positions of the projection portions of the vibrator member. By properly changing the travelling wave and standing wave, a smaller stepping angle of the rotor than the interval between nodes or the stepwise movement of the nodes may be achieved.

EP 0 580 447 A1

# FIG. 1

OSCILLATING CIRCUIT — 102

POWER SOURCE — 101

PRESSURE REGULATING MEANS — 113

DIVIDING CIRCUIT — 103

TIMING PULSE GENERATING CIRCUIT — 104

SWITCHING CIRCUIT — 108

PIEZOELECTRIC VIBRATOR DRIVE CIRCUIT — 109

PIEZOELECTRIC VIBRATOR — 110

VIBRATING MEMBER — 111

MOVING MEMBER — 112

TRAVELING-WAVE GENERATING CIRCUIT — 105

STANDING-WAVE GENERATING CIRCUIT — 106

ULTRASONIC VIBRATION GENERATING CIRCUIT — 107

OUTPUT MEANS — 114

EP 0 580 447 A1

The present invention relates to ultrasonic motors and to electronic apparatus equipped with an ultrasonic motor. Such an ultrasonic motor has a rotor friction driven by ultrasonic vibrations caused by the compression/expansion movement of a piezoelectric vibrator.

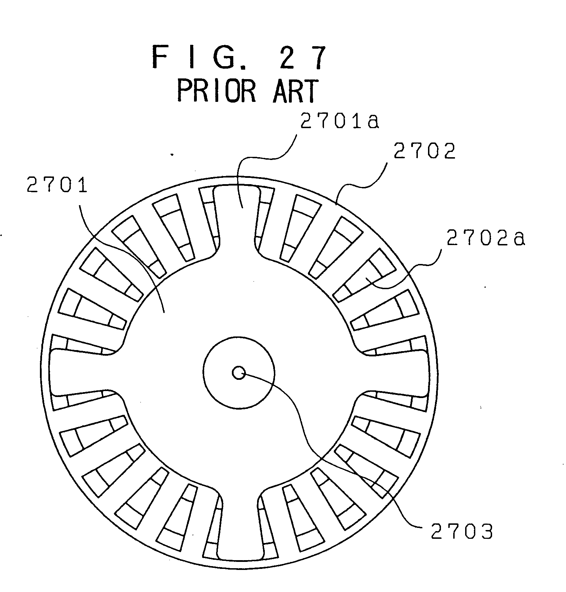

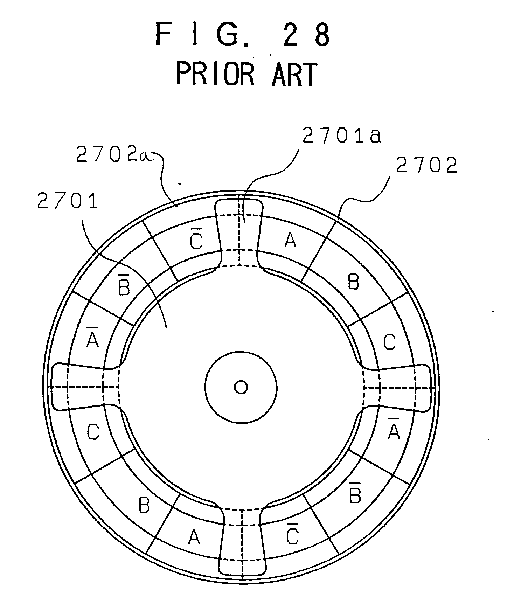

An ultrasonic motor capable of stepping drive by predetermined steps, without using a position detecting means as an encoder, is disclosed in JP-B-3-207281 (1991) and JP-B-4-38180 (1992). In such an ultrasonic motor, a rotor 2701 (Figure 27) has four convex projections 2701a and is in contact with a slotted vibrator member 2702 having an annular piezoelectric vibrator 2702a fixed thereto. The vibrator 2702a is constructed of a number of electrodes, for example, twelve in the electrode pattern shown in Figure 28.

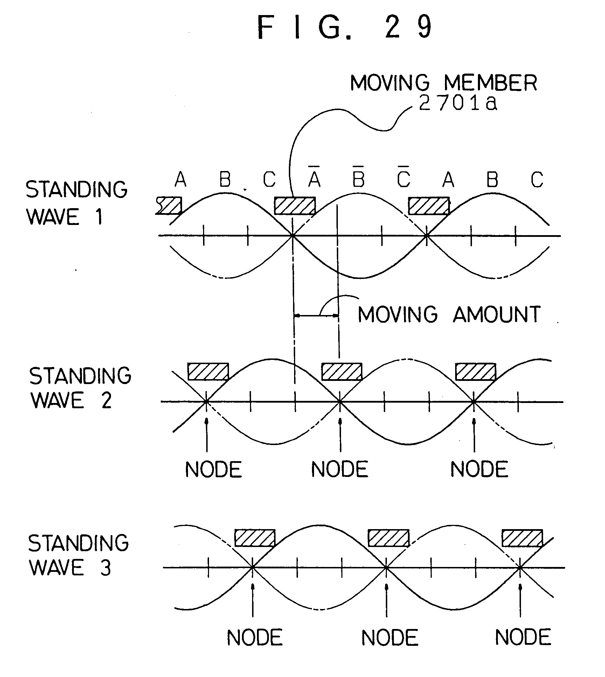

In operation of the ultrasonic motor in the stepping mode with a standing wave 1 (Figure 29) the sectors A, B, C are vibrated with a mutual phase shift of 180° compared with sectors $\overline{A}$, $\overline{B}$, $\overline{C}$, respectively. As a result, force is applied to the convex portions 2701a of the rotor in a direction from the crest of the standing wave to the node thereof, and when the convex portions 2701a are positioned above the nodes of the standing wave 1, where the force is in balance. With another standing wave 2, the sectors B, C, $\overline{A}$ are vibrated in anti-phase with the sectors $\overline{B}$, $\overline{C}$, A, respectively. With a further standing wave 3, the sectors C, $\overline{A}$, $\overline{B}$, are vibrated in anti-phase with the sectors $\overline{C}$ A, B, respectively. The positions of the nodes are stepwise moved by successively repeating the standing wave 1, the standing wave 2, the standing wave 3, the standing wave 1 and so on in this order. Thus, the convex portions 2701a of the rotor 2701 are moved by an amount equal to this stepwise movement. With the electrode pattern structure of the ultrasonic motor shown in Figure 28, the rotor 2701 is rotated once about the centre 2703 in twelve steps.

However, in such an ultrasonic motor because the stepwise movement of the rotor is determined by the stepwise movement of the nodes of the standing wave, the stepping angle of the rotor cannot be made smaller than the interval between the nodes of the standing waves, or the stepwise movement of the nodes of the standing wave.

It is an object of the present invention to provide an ultrasonic motor capable of setting a stepping angle of a rotor to a value smaller than either the interval between nodes of standing waves, or the stepwise movement of the nodes of a standing wave.

Accordingly an ultrasonic motor according to the present invention, comprising

a piezoelectric vibrator having an electrode pattern;

a vibrator member secured to the piezoelectric vibrator and having projection portions and a rotor or moving member having poles or inequality portions pressed into engagement, direct or indirect, with the projection portions of the vibrator member by pressure regulating means, is characterised by an ultrasonic vibration generating circuit for generating a travelling wave whose vibration wave number is λ and for generating either one or more sorts of standing waves having a number of nodes, and

a switching circuit for selecting either a travelling wave or one of the standing waves to drive the piezoelectric vibrator, whereby the rotor is driven by expansion/compression movement of the piezoelectric vibrator to move when a travelling wave is supplied, and is stopped with at least one pole aligned with one node, when a standing wave is supplied by the vibrator.

Advantageously, the number of poles or inequality portions is greater than the number of nodes when the standing wave is oscillated, and the number of poles or inequality portions and the node number of nodes have at least one common denominator which is a positive integer greater than 1.

The scope of the present invention is defined by the appended claims; and how it can be carried into effect is hereinafter particularly described with reference to the accompanying drawings in which:-

Figure 1 is a functional block diagram showing a typical arrangement of an ultrasonic motor according to the present invention;

Figure 2 is a system block diagram of a first embodiment of ultrasonic motor according to the invention;

Figure 3 is a perspective view of the mechanical portions of a first embodiment of ultrasonic motor according to the present invention;

Figure 4(a) is a circumferential elevation of the motor of Figure 3, broken and laid out;

Figure 4(b) is a view showing the vibration conditions during drive of the motor of Figure 3;

Figure 5(a) is a view similar to Figure 4(a) in the stop condition;

Figure 5(b) shows vibration conditions during stop of the motor of Figure 3;

Figure 6 is a plan view of the rotor of the motor of Figure 3;

Figure 7 is a plan view of the vibrator member of the motor of Figure 3;

Figure 8 is a plan view of the vibrator member and rotor (treated as transparent) of the motor of Figure 3;

Figure 9 is a diagram showing the rotation conditions of the rotor and the corresponding current waveforms of the motor of Figure 3;

Figure 10 is a table for showing a relationship among various conditions such as the subdividing number of the electrodes of the piezoelectric element employed in the ultrasonic motor according to the first embodiment of the present invention;

Figure 11 is a circuit diagram of the first embodiment of ultrasonic motor according to the present invention;

Figure 12 is a timing chart showing operation of the motor of Figure 11;

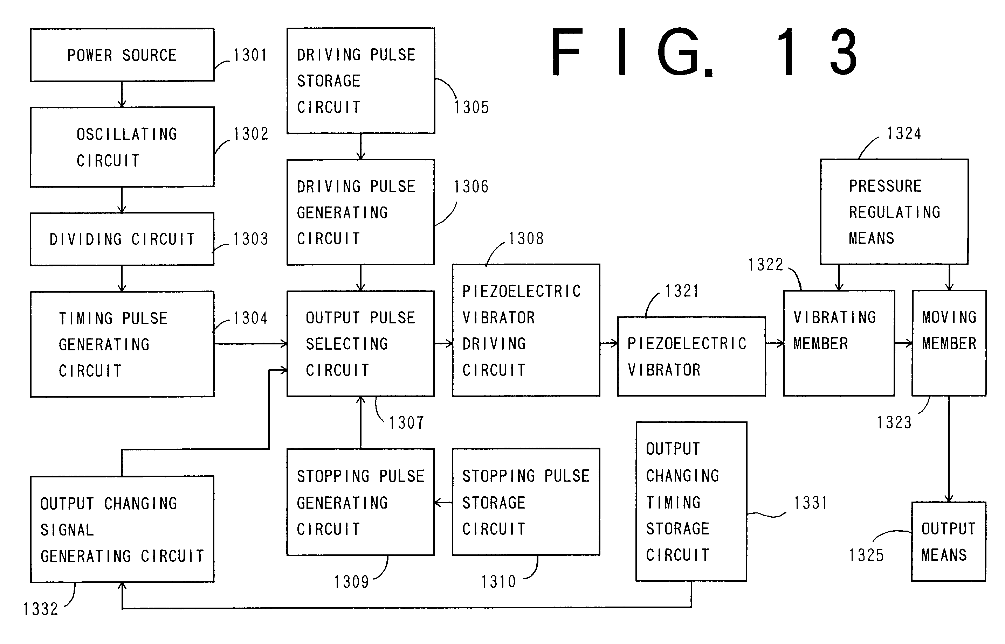

Figure 13 is a system block diagram of a second embodiment of ultrasonic motor according to the present invention;

Figures 14(a) and 14(b) are views similar to Figures 5(a) and 5(b) representing the stop condition of a third embodiment of ultrasonic motor according to the present invention;

Figure 15 is a view similar to Figure 8 of the third embodiment of ultrasonic motor according to the present invention;

Figures 16(a) to 16(e) are views similar to Figures 4(a), 4(b) and 5(b) of a fourth embodiment of ultrasonic motor according to the present invention;

Figure 17 is a plan view of the fourth embodiment of ultrasonic motor according to the present invention, showing electrode patterns of the piezoelectric vibrator;

Figures 18(a) to 18(e) are views similar to Figures 16(a) to 16(e) for a fifth embodiment of the present invention;

Figure 19 is a view similar to Figures 8 and 15, of the fifth embodiment of ultrasonic motor according to the present invention;

Figures 20(a) to 20(e) are views similar to Figures 16(a) to 16(e), for a sixth embodiment of ultrasonic motor according to the present invention;

Figure 21 is a view similar to Figures 8, 15 and 19, of the sixth embodiment of ultrasonic motor according to the present invention,

Figures 22(a) to 22(e) are views similar to Figures 16(a) to 16(e), for a seventh embodiment of ultrasonic motor according to a seventh embodiment of the present invention;

Figure 23 is a view similar to Figures 8, 15, 19, 21, of the seventh embodiment of ultrasonic motor according to the present invention;

Figure 24 is a view similar to Figure 8 of an eighth embodiment of ultrasonic motor according to the present invention;

Figure 25 is a plan view of an electronic apparatus equipped with an ultrasonic motor according to the present invention;

Figure 26 is a partial sectional view of the electronic apparatus of Figure 25;

Figure 27 is a plan view of a prior art ultrasonic motor;

Figure 28 shows a positional relationship between the electrode patterns of the piezoelectric vibrator and the rotor of the motor of Figure 27;

Figure 29 is an explanatory diagram showing vibration conditions of the motor of Figure 28.

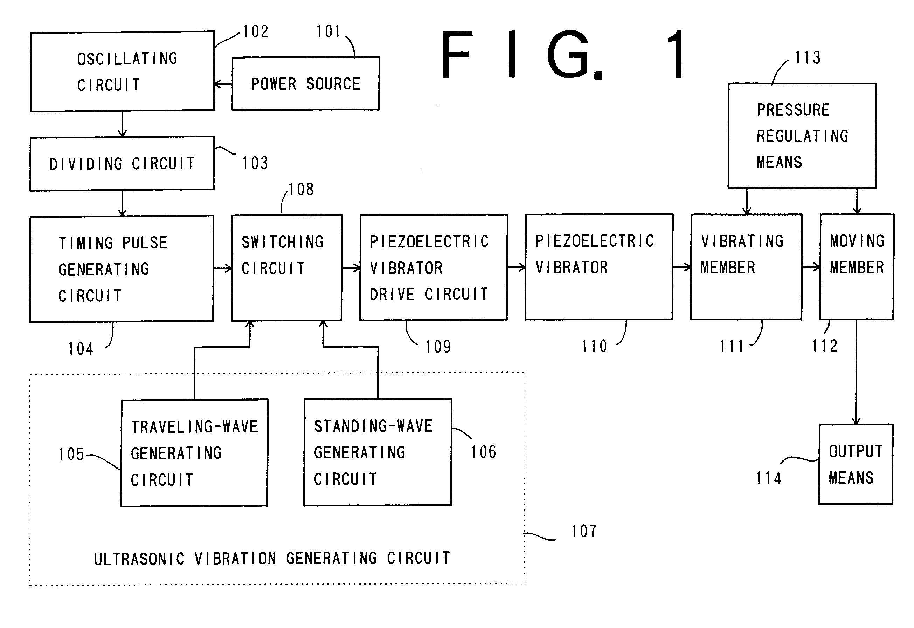

In a typical arrangement of ultrasonic motor according to the present invention, an oscillating circuit 102 (Figure 1) is driven by a power source 101 to output a predetermined output signal under the control of an oscillating source such as a crystal oscillator. A dividing circuit 103 receives and frequency divides the output signal from the oscillating circuit 102. A timing pulse generating circuit 104 receives the output signal from the dividing circuit 103 and outputs a predetermined timing pulse.

An ultrasonic vibration generating circuit 107 includes

a travelling wave generating circuit 105 which generates a travelling wave to rotate a rotor 112, and

a standing wave generating circuit 106 which generates a standing wave to stop rotation of the rotor 112. Thus, the circuit 107 generates either the travelling wave or the standing wave.

The timing pulse from the circuit 104 is received by a switch circuit 108 which, upon receipt of the output signal of the travelling wave generating circuit 105 or the output signal of the standing wave generating circuit 106, outputs a pulse to a piezoelectric vibrator drive circuit 109. The piezoelectric vibrator drive circuit 109 applies a predetermined high-frequency voltage to a piezoelectric vibrator 110, whose ultrasonic vibrations are applied to a vibrator member 111 having a plurality of comb-like projection portions. The rotor 112 performs rotation and stopping operations, and has inequality portions for stopping the rotor when the standing wave is generated. The number of inequality portions is greater than the number of nodes when the standing wave is oscillated. A pressure regulating means 113 applies constant pressure between the vibrator member 111 and the motor 112. An output means 114 is operated by way of the operation of the motor 112.

In an ultrasonic motor according to the present invention, the rotor is stopped at a force-balanced position by switching the travelling wave for driving the rotor and the standing wave for stopping the rotor under proper state, depending upon the inequality portion position of the rotor, the node position of the standing wave, and the projection portion position of the vibrator member. In other words, the stepping angle of the rotor may be made smaller than either an interval of the nodes of the standing waves, or a moving amount of the node of the standing wave.

In a first embodiment of ultrasonic motor according to the present invention,

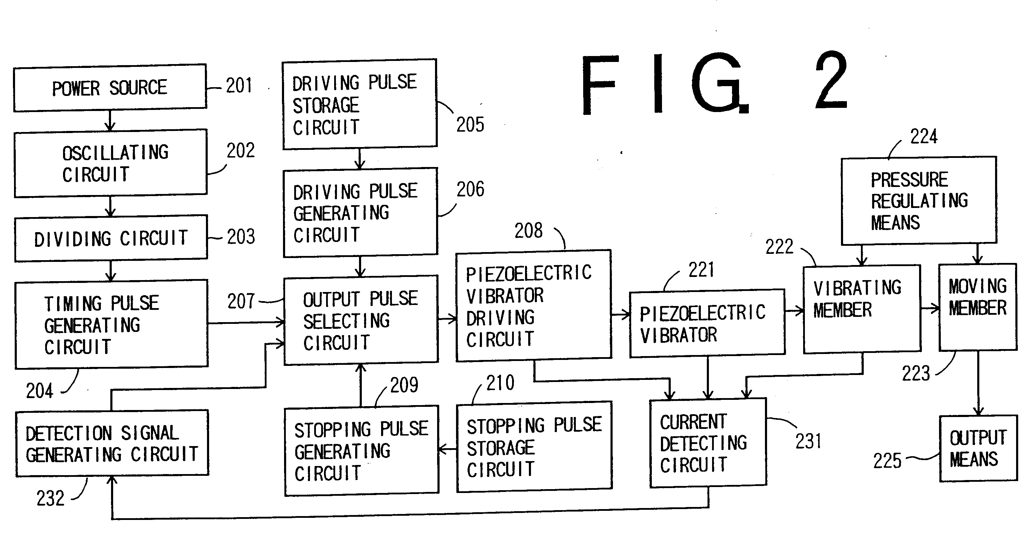

an oscillating circuit 202 (Figure 2) is driven by a power source 201 and outputs a predetermined output signal, under control of an oscillating source such as a crystal oscillator. A dividing circuit 203 receives and frequency divides the output signal of the oscillating circuit 202. A timing pulse generating circuit 204 receives the output signal from the dividing circuit 203 to output a predetermined timing pulse signal.

A driving pulse storage circuit 205 stores driving pulses having various conditions suitable for generating a driving pulse in response to the rotation conditions of a rotor 223 of the ultrasonic motor. A driving pulse generating circuit 206 receives the output signal of the driving pulse storage circuit 205 to generate the driving pulse. A stopping pulse storage circuit 210 stores a stopping pulse having various conditions suitable for generating such a stopping pulse in response to the rotation condition of the rotor 223 of the ultrasonic motor. A stopping pulse generating circuit 209 receives the output signal of the stopping pulse storage circuit 210 to generate the stopping pulse.

An output pulse selecting circuit 207 controls an output pulse to a piezoelectric vibrator driving circuit 208, receiving the output signal of the driving pulse generating circuit 206, the output signal of the stopping pulse generating circuit 209, and the timing pulse from circuit 204, together with another signal. The piezoelectric vibrator driving circuit 208 applies a predetermined high-frequency voltage to a piezoelectric vibrator 221 to produce ultrasonic vibrations applied to a vibrator member 22 of the motor. The rotor 223 has a plurality of poles for stopping the rotor when the standing wave is generated, and performs various operations such as rotation. A pressure regulating means 224 applies constant pressure between the vibrator member 222 and the rotor 223. An output means 225 is operated in response to the operation of the rotor 223.

A current detecting circuit 231 is connected to receive output signals from at least one of the piezoelectric vibrator driving circuit 208, the piezoelectric vibrator 221, and the vibrator member 222, which change in accordance with either a load condition, or a rotation condition of the ultrasonic motor. When the ultrasonic motor is operated to drive the rotor 223, the output signals change and a current results. The current detecting circuit 231 outputs an output signal corresponding to the detected current to a detection signal generating circuit 232 which outputs a detection signal corresponding to the detected current to the circuit 207.

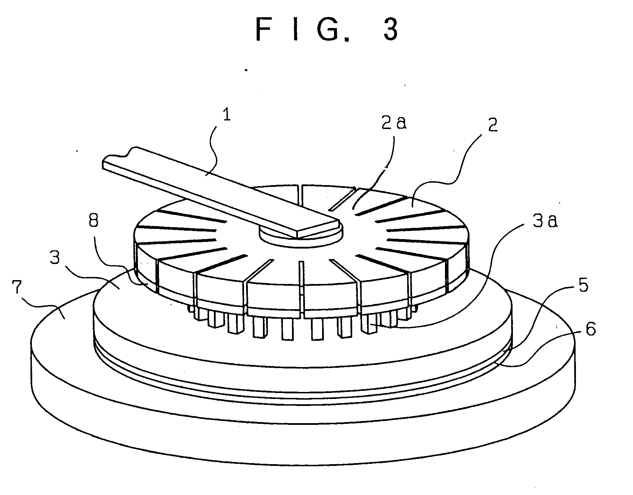

In the first embodiment of ultrasonic motor according to the present invention, a piezoelectric vibrator 5 (Figure 3) generates a travelling wave used to drive the ultrasonic motor. Another piezoelectric vibrator 6 generates a standing wave used to stop the ultrasonic motor.

A rotor 2 has slots at equal intervals around the rotor, forming poles 2a used to stop the rotor 2 when the standing wave is produced. The number of slots and poles 2a is larger than the number of nodes when one sort of standing wave is produced. A vibrator member 3 has a plurality of comb-like upwardly projecting portions 3a which are fixed in relation to a centre shaft (not shown) fixed to a base plate 7. The poles of the rotor 2 are in contact with the comb-like projecting portions 3a of the vibrator member 3 through friction members 8. The rotor 2 is rotatably mounted on the centre shaft. A pressure regulating spring 1 depresses the rotor 2 against the comb-like projecting portions 3a of the vibrator member 3 at a predetermined pressure. The poles have elastic properties at right angles to the plane of movement of the rotor.

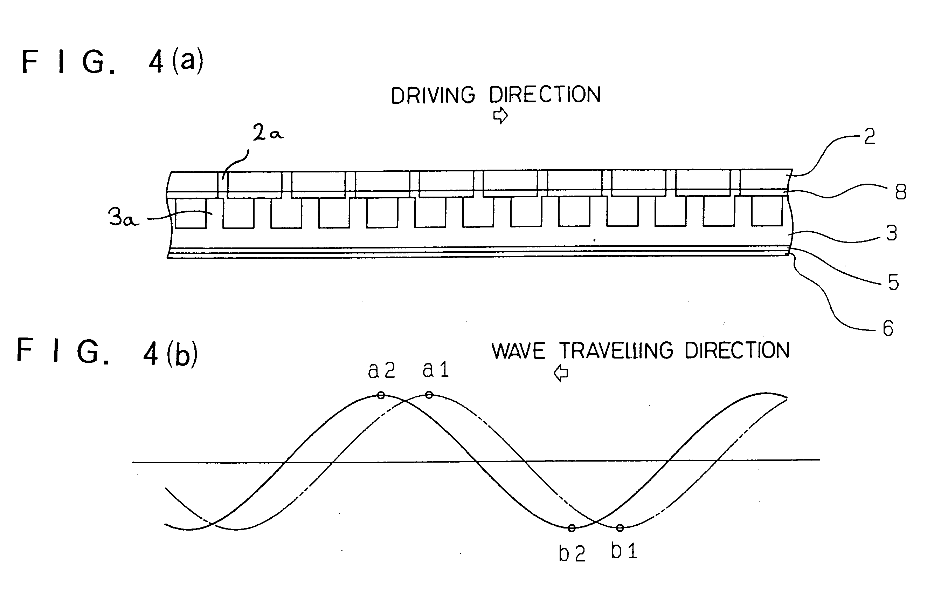

When the piezoelectric vibrator 5 (Figure 4(a)) is operated, it generates a driving travelling wave (Figure 4(b)) which travels from a1 to a2 to bl to b2. The rotor 2 having the slots and poles 2a is driven in a direction opposite to the wave travelling direction.

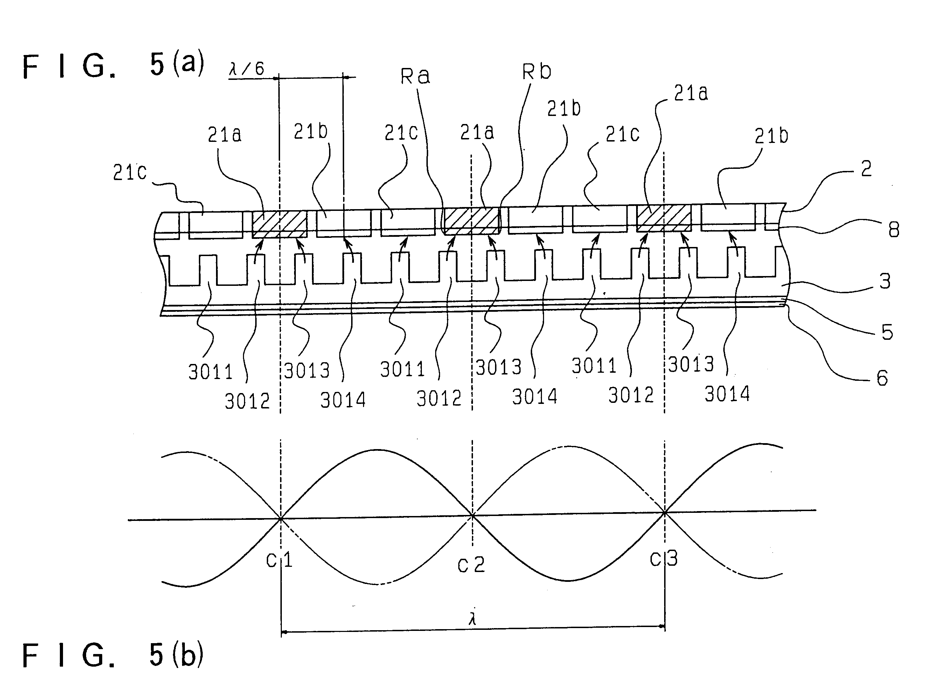

The comb-like projecting portions 3a of the vibrator member 3 are arranged at positions spaced from the nodes of the standing wave, and eight projecting portions 3a are arranged within one standing wave (Figure 5(a)). The slots and poles 2a of the rotor 2 are formed at equal intervals of $\lambda/6$. For ease of understanding the rotor 2 and the vibrator member 3 are shown separated in Figure 5.

When the operation of the piezoelectric vibrator 5 is stopped, and the piezoelectric vibrator 6 is operated to produce standing waves (Figure 5(b)), the standing waves are generated at the vibrator member 3 so that nodes of these standing waves are present at c1, c2, c3, each complete wave being $\lambda$ long.

In Figure 5(a), the projecting portions 3a are identified by reference numerals 3011 to 3014. Poles of the rotor 2 are identified by reference numerals 21a to 21c. Forces are exerted at the comb-like projecting portions 3011 to 3014 in the directions of the arrows. If there is imbalance between the forces exerted on the lower end side portions Ra and Rb of the poles of the rotor 2, the rotor 2 is rotated. However, when the rotor 2 reaches the position shown in Figure 5(a), equal areas of the contact planes of the projecting portions 3012 and 3013 are located under the end portions Ra and Rb of the poles 21a, so that equal forces are exerted on each side of the lower end portions Ra and Rb of the poles 21a. The centres of the poles 21a are positioned at the node positions of the standing waves where these forces are balanced between the projecting portions 3012 and 3013.

Forces are exerted on the poles 21b and 21c in opposite directions by the comb-like projecting portions 3011 and 3014 of the vibrator member 3. As the projecting portions 3011 and 3014 are positioned below the lower end side portions Ra and Rb, respectively of the respective poles 21b and 21c, the forces balance each other, which implies that virtually no force is exerted on the rotor 2 through the poles 21b and 21c. As a consequence, the rotor 2 is positioned by the poles 21a while the standing wave is generated.

The poles of the rotor 2 are driven by the driving travelling wave to a position near the node of the standing wave, and then the driving travelling wave is instantaneously changed into the standing wave, so that the rotor 2 can be stopped. As each of the poles 21a, 21b and 2c can reach a position over the projecting portions 3012 and 3013 and be stopped at that node position, the step interval of the rotor 2 can be reduced to a value smaller than the interval between the node portions of the whole standing wave. As shown for the first embodiment, the step interval is set to $\lambda/6$.

As the switching time between the driving travelling wave and the stopping standing wave is finite, the rotor 2 is driven by the driving travelling wave to a distance less than half the step interval from a predetermined stopping position of the rotor 2, and then the travelling wave is changed into the standing wave. Although the driving piezoelectric vibrator of the first embodiment has separate driving and stopping piezoelectric vibrators, a single piezoelectric vibrator could be employed, the stepping drive being achieved by switching different electrode patterns and applying voltage at different places.

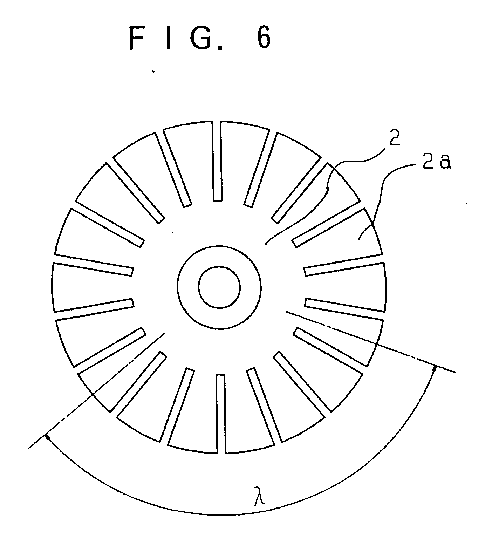

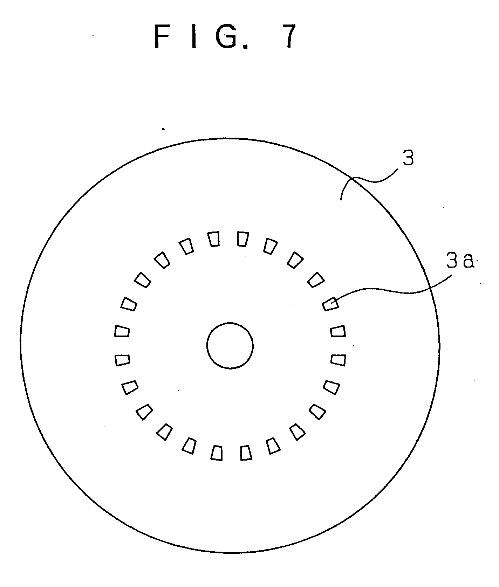

The rotor 2 (Figure 6) has eighteen slots 2a at equal intervals of 200 circumferentially. The standing wave interval $\lambda$ covers 120° or six slots. The widths of the slots 2a are selected so that the poles are of such a width that the rotor is stopped when a standing wave is generated. The vibrator member 3 (Figure 7) has twenty four comb-like projecting portions 3a arranged at equal intervals circumferentially.

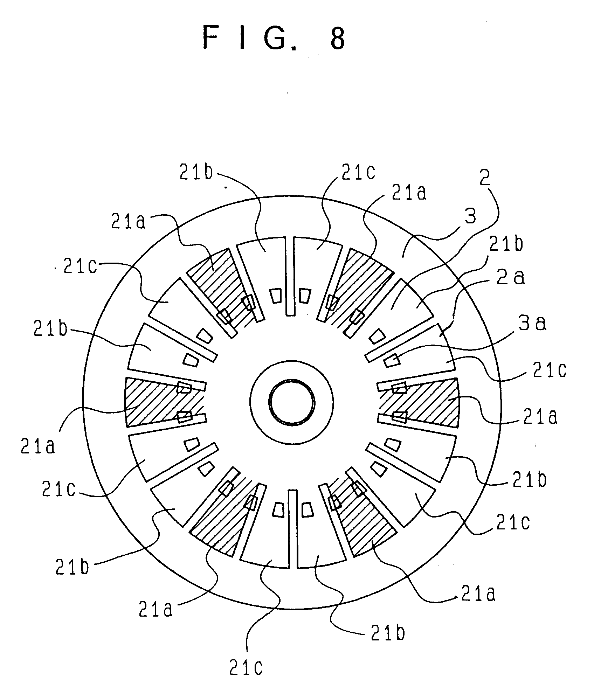

As shown in Figure 8, there are six poles 21a of the rotor 2 positioned between two projecting portions of the vibrator 3 when a standing wave is generated, whilst there are twelve poles 21b and 21c over single projecting portions of the vibrator 3. The wave number of the standing wave is selected to be three. The minimum stepping angle of the rotor 2 is 20° by switching the driving travelling wave and the stopping standing wave as each succeeding pole 21a, 21b, 21c, reaches a node position. The poles positioned at the nodes due to an occurrence of the standing wave at six places circumferentially are shown hatched.

If at least two poles are provided on the rotor which are positioned to the nodes by generating the standing waves, a stable stopping condition of the rotor can be achieved when the standing wave is generated. If the poles of the rotor are arranged at equal intervals circumferentially, and the wave number of the standing wave is selected to be three, then because six nodes are generated in the vibrator member circumferentially, the poles may be formed at two places, three places, or six places.

In other words, the number of poles is equal to an integral denominator of the node number during generation of the standing wave. The relationship between the number of poles provided circumferentially and the number of nodes when the standing wave is generated, is defined by at least one common denominator corresponding to a positive integer greater than two. At the same time, the number of poles is such that 360° can be divided exactly.

Because the poles are formed on the rotor 2, the latter has elasticity in the vertical direction. As a result, as the overall surface of the comb-like projecting portions 3a of the vibrator member 3 can be in contact with the slide surface of the rotor 2, a stable drive state, or stable stop condition can be achieved.

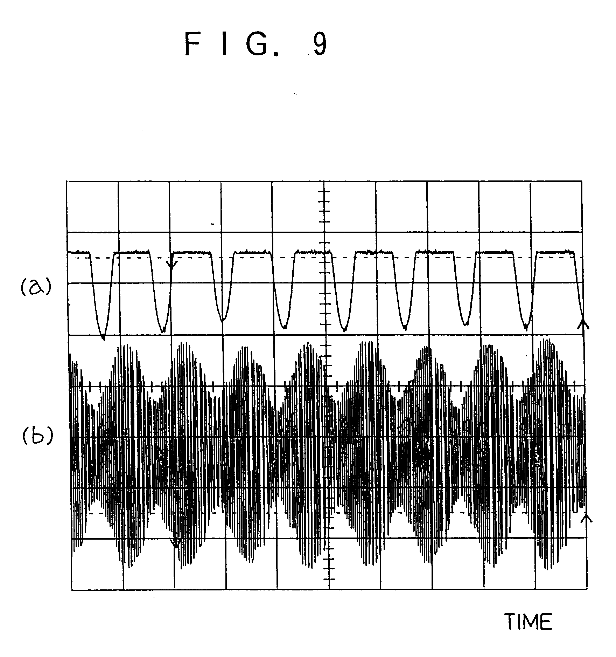

When a travelling wave of the ultrasonic motor is produced, the position of a pole of the rotor during rotation, measured by a non contact type displacement gate, is shown in Figure 9(a). In Figure 9(b) is shown the corresponding current waveform when the pole is so positioned. If the rotor having the poles is rotated at a constant speed by the travelling wave, an envelope of a crest value of the current waveform varies periodically.

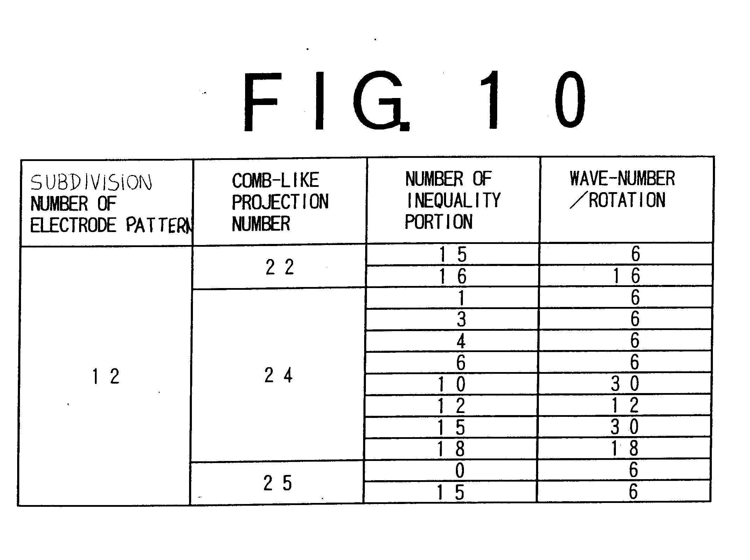

Figure 10 is a table for representing a relationship between the sub-division number of the electrode pattern for the piezoelectric element employed in the ultrasonic motor according to the first embodiment of the present invention, the number of comb-like projecting portions of the vibrator member, the number of poles of the rotor, and the changing number of the envelope for the current wave generated in the rotor per one revolution of the rotor moving member. From this table, it will be seen that there is a difference in the changing number of the envelope of the current waveform produced during one revolution of the rotor, depending upon the division number of the electrode for the piezoelectric element, the number of comb-like projecting portions of the vibrator member, and the number of poles of the rotor while the rotor is driven by the travelling wave.

In each case considered, the electrode division number of the piezoelectric element is twelve. If the number of comb-like projecting portions of the vibrator member is twenty two, and the number of poles of the rotor is fifteen, then the wave number of the envelope-formed current generated per revolution is six. When the number of comb-like projecting members is twenty four, and the number of poles of the rotor is ten, the changing number of the envelope-formed current generated per revolution is thirty. If the electrode number of comb-like projecting members of the vibrator member is twenty-four, and the number of poles of the rotor is eighteen, the changing number of the envelope-shaped current generated per revolution is eighteen.

The rotation and step interval of the ultrasonic motor can be controlled by using the relationship between the current waveforms and the numbers of poles of the rotor as illustrated in Figure 9 and Figure 10.

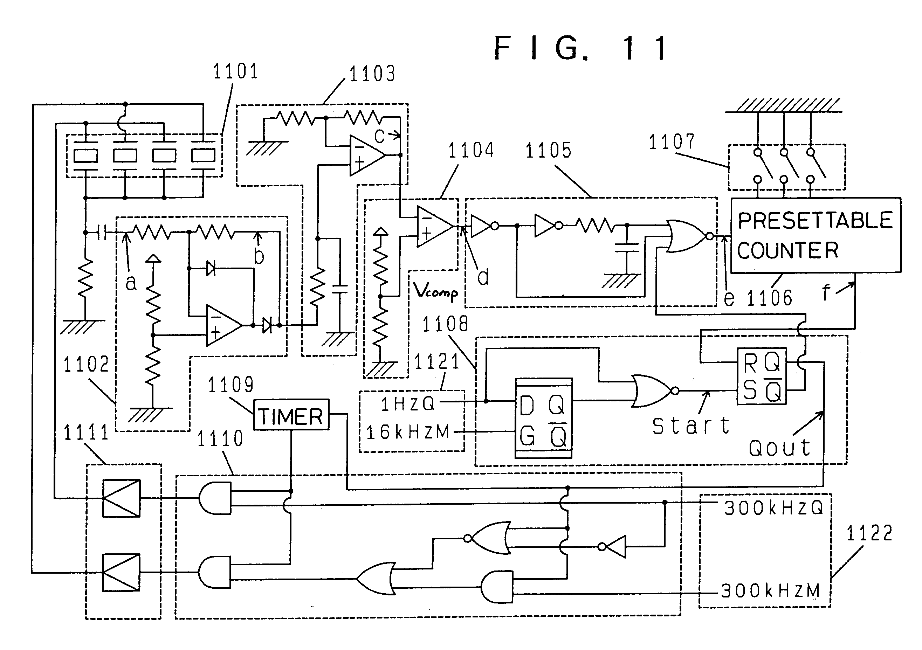

In the circuit of the first embodiment of the ultrasonic motor according to the present invention, a rectifier/amplifier circuit 1102 (Figure 11) rectifies an output signal from a piezoelectric vibrator 1101 and then amplifies the rectified signal. A smoothing circuit 1103 receives an output signal from the rectifier/amplifier circuit 1102 to smooth this signal. The signal received is the envelope of a crest value of a current waveform and is converted into either a continuous or a pulsatory signal. A comparator circuit 1104 compares an output signal from the smoothing circuit 1103 with a preselected voltage Vcomp to detect rotation of the rotor. A rise detecting circuit 1105 receives an output signal from the comparator circuit 1104 and, upon detection of a rising signal, outputs a signal to a presettable counter 1106 which sets the output number drive signal for the travelling wave by a switch 1107.

A pulse generating circuit 1122 outputs signals of 300kHzQ and 300kHzM to the output pulse selecting circuit 1110 which selects either a travelling wave output signal or a standing wave output signal.

A dividing circuit 1121 emits output signals of 1HzQ and 16kHzM to a drive pulse generating circuit 1108 which controls the output of a drive pulse to a timer 1109 and circuit 1110. The timer 1109 sets the output time of the travelling wave output signal and the standing wave output signal, and also the time during which neither the travelling wave output signal nor the standing wave output signal is output

The Q signal and M signal are phase shifted by 900. The signals of 300kHzQ and 300HzM output from the pulse generating circuit 1122 are selected to be of different values, depending upon the structures and designs of the ultrasonic motors. A piezoelectric vibrator driving circuit 1111 receives either the travelling wave output signal, or the standing wave output signal and outputs an output signal to drive the piezoelectric vibrator 1101.

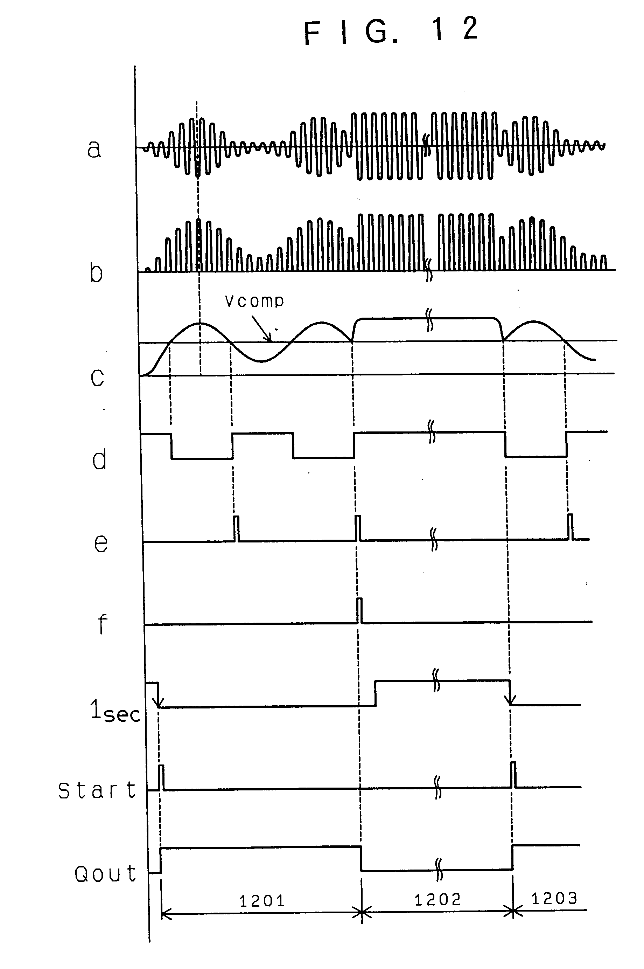

The signal "a" (Figure 12) output from the piezoelectric vibrator 1101 (Figure 11) is rectified and amplified, thereby becoming a signal "b" (Figure 12). This signal "b" is smoothed to produce a signal "c". The signal "c" is compared with a preset voltage value "Vcomp" to obtain a signal "d". At the rise of this signal "d", a signal "e" is output to the presettable counter 1106 (Figure 11).

The presettable counter 1106 outputs a signal "f" after a number of signals "e" predetermined by operating the switch 1107. In response to the signal "f" and a signal "Start" in the circuit 1108, a signal "Qout" is output and is used to control the outputs of the travelling wave and the standing wave.

During a time period 1201 when "Qout" is high, the travelling wave is output, and during a succeeding period 1202, a standing wave is produced. During a following period 1203, the travelling wave is again output. These periods 1201, 1202 and 1203 may be set to preselected values by way of the timer 1109.

A rest period during which neither the standing wave nor the travelling wave is output, may be set between the period 1201 and the period 1202, or between the period 1202 and the period 1203 or at both positions. An advantage of such a rest period is that adverse influences of a previously output signal, for example, residual vibrations, can be reduced when the output of either the travelling wave, or the standing wave is switched.

An ultrasonic motor capable of rotating an output shaft in preselected steps within a constant time, may be realized by setting the set value of the timer to various values.

In a second embodiment of ultrasonic motor according to the present invention, switching timings between the occurrence of a driving travelling wave and the occurrence of a stopping standing wave are performed without employment of current detection.

In the second embodiment of ultrasonic motor according to the present invention, a power source 1301 drives an oscillating circuit 1302 which outputs a predetermined output signal under control of an oscillating source such as a crystal oscillator. A dividing circuit 1303 receives and frequency divides the output signal of the oscillating circuit 1302. A timing pulse generating circuit 1304 receives the output from the dividing circuit 1303 to output a predetermined timing pulse signal.

A driving pulse storage circuit 1305 stores driving pulses having various conditions suitable for generating a driving pulse in response to the rotation conditions of a rotor 1323 of the ultrasonic motor. A driving pulse generating circuit 1306 receives the output of the circuit 1305 to generate the driving pulse. A stopping pulse storage circuit 1301 stores stopping pulses having various conditions suitable for generating a stopping pulse in response to the rotation condition of the rotor 1323. A stopping pulse generating circuit 1309 receives the output signal of the circuit 1310 to generate the stopping pulse.

An output pulse selecting circuit 1307 controls an output pulse to a piezoelectric vibrator driving circuit 1308, receiving the output signal of the driving pulse generating circuit 1306, the output signal of the stopping pulse generating circuit 1309, and the timing pulse from the circuit 1304, together with another signal. The piezoelectric vibrator driving circuit 1308 applies a predetermined high frequency voltage to a piezoelectric vibrator 1301 to produce ultrasonic vibrations applied to a vibrator member 1322 of the motor. The rotor 1323 has a plurality of poles for stopping the rotor when the standing wave is generated and performs various operations such as rotation. A pressure regulating means 1324 applies constant pressure between the vibrator member 1322 and the rotor 1323. An output means 1325 is operated in response to the operation of the rotor 1323.

An output changing timing storage circuit 1331 stores predetermined changing timings for the drive pulse and the stop pulse, which are output to an output changing signal generating circuit 1332 which generates changing timing signals for the drive pulse and the stop pulse. These timing signals are supplied to the output pulse selecting circuit 1307.

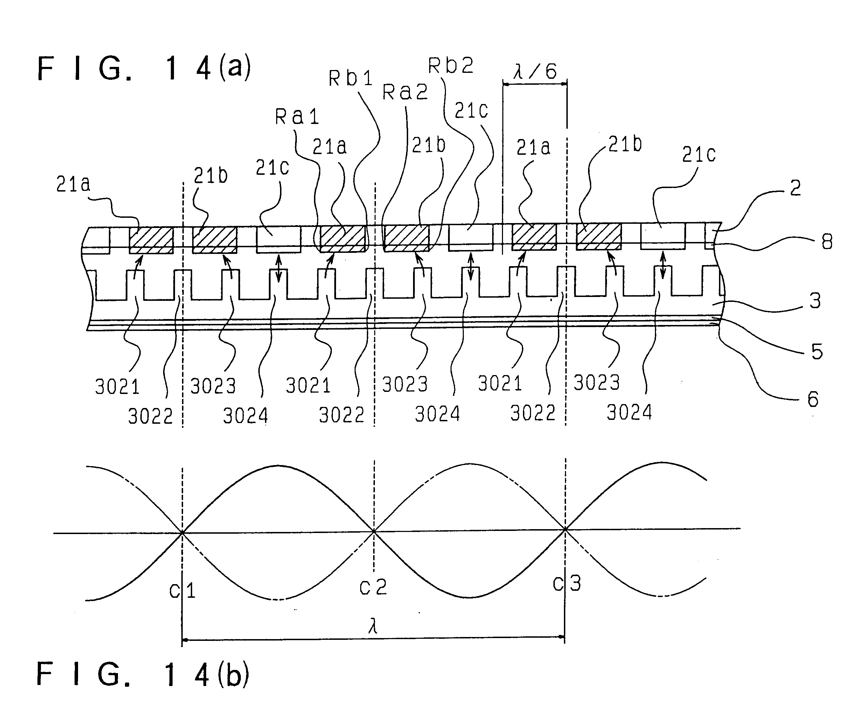

In a third embodiment of ultrasonic motor according to the present invention, the comb-like projecting portions of the vibrator member are arranged aligned with the nodes of the stopping standing wave (Figures 14(a) and 14(b)). In Figure 14(a), the projecting portions are identified by reference numerals 3021 to 3024, and poles of the rotor 2 by reference numerals 21a to 21c.

The poles of the rotors 2 are formed at equal intervals spaced by $\lambda/6$, similar to the first embodiment. Eight comb-like projecting portions of the vibrator member are arranged with respect to a single standing wave, and are arranged at the node positions of the standing wave.

When the operation of the piezoelectric vibrator 5 is stopped and the piezoelectric vibrator 6 is energized to produce the stopping standing wave (Figure 14(b)), the standing waves are generated at the vibrator member 3 so that nodes of these standing waves are present at cl, c2, c3. Forces are exerted at the comb-like projecting portions 3011 to 3014 in the directions of the arrows. If there is imbalance between the forces exerted on the lower end side portions Ral, Rbl, Ra2, Rb2 of the adjacent poles 21a, 21b of the rotor 2, the latter is rotated slightly.

However, when the rotor 2 reaches the position shown in Figure 14(a), the projecting portion 3021 is located under the lower end side portion Ral of the pole 21a, and the projecting portion 3023 is located under the lower end side portion Rb2 of the pole 21b. At this time, forces are exerted from opposite sides of the poles 21a and 21b to both the lower end side portions Ral and Rb2 towards the slot between poles 21a and 21b. The slot between the poles 21a and 21b is positioned at the node of the standing wave where these forces are balanced.

When the standing wave is generated, as the comb-like projecting portion 3022 of the vibrator member is positioned at the node of the standing wave, and the projecting portion 3024 is located at the crest of the standing wave, no force to drive the pole 21c is produced. As a consequence, the rotor 2 is positioned by the poles 21a and 21b when the standing wave is produced.

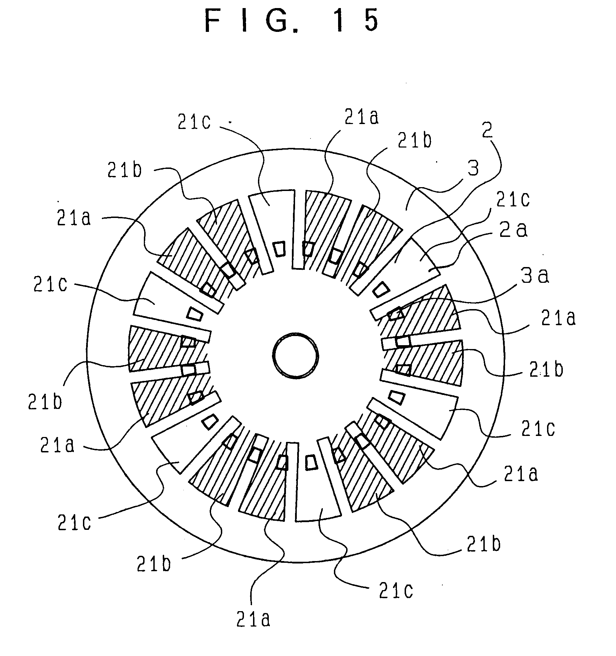

When the wave number of the standing wave is three (Figure 15), and there are six pairs of poles 21a and 21b positioned to the nodes of the standing wave, and the minimum step angle of the rotor 2 is 20° by switching from the drive condition shown in Figure 4(a) to the stop condition shown in Figure 14(a). This stop condition is similar to that of the first embodiment, but as the positional relationship between the node of the standing wave and the comb-like projecting portions of the vibrator member is different from that of the first embodiment, the stopping position of the rotor 2 is also different therefrom.

In a fourth embodiment of ultrasonic motor of the present invention, a single piezoelectric vibrator is employed and two different sorts of standing waves are generated.

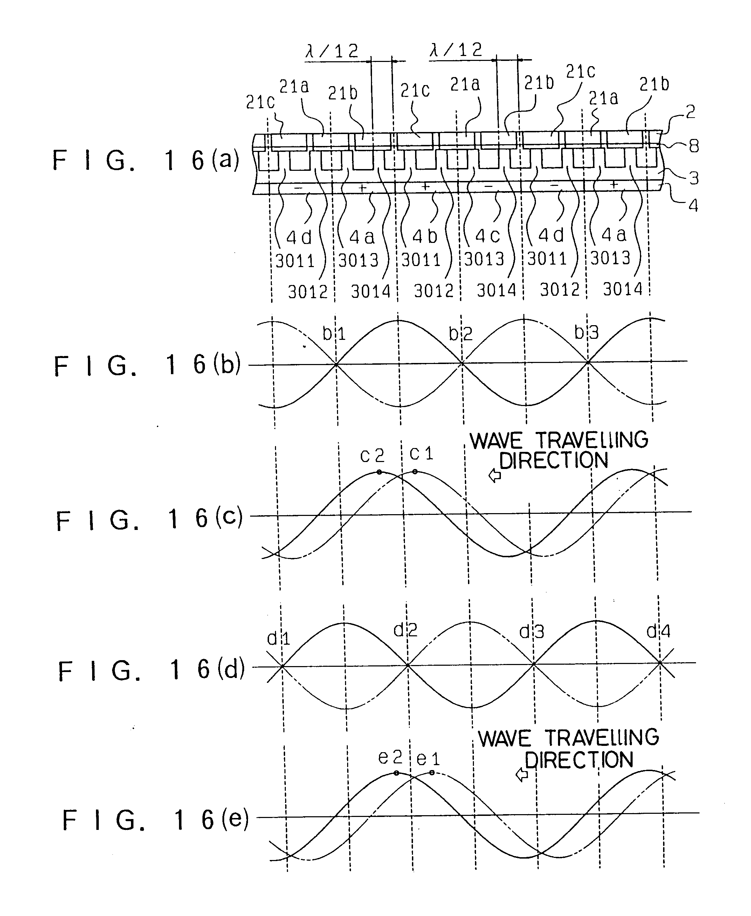

A single piezoelectric vibrator 4 (Figure 16) replaces the vibrators 5 and 6, and has a plurality of subdivided electrode patterns 4a, 4b, 4c and 4d joined to the vibrator member 3 by means of adhesive. The signs + and - shown in Figure 16 indicate the polarization direction of the respective electrode pattern portions. Pairs of adjacent electrode patterns 4a, 4b, and 4c, have been polarized-processed along the same direction. When high-frequency voltage signals having the same phase are applied to the electrode patterns 4a, 4b, 4c and 4d under this condition, as indicated in Figure 16(b), standing waves having nodes bl, b2, b3 are produced in the vibrator member 3. This motor is operated so that the rotor is stopped with the centre portion of the pole 21a aligned with the centre of a node.

Subsequently, when high-frequency voltage signals having a phase difference of 900 are applied to the electrode patterns 4b and 4d and the electrode patterns 4a and 4c, respectively, travelling waves from cl to c2 (Figure 16(c)) are propagated in the vibrator member 3. Then, the rotor 2 having a plurality of poles is transported in a direction opposite to the wave propagating direction, as indicated in Figure 16(a). If these operations are repeated successively, then the rotor may be driven stepwise in intervals of $\lambda/6$, namely 20° when the wave number of the standing wave is selected to be three.

If high frequency voltage signals having phase shift of 1800 are applied to the electrode patterns 4b and 4d and 4a and 4c, respectively, a standing wave having nodes at dl to d4 (Figure 16(d)) is generated in the vibrator member 3, and the rotor 2 can be stopped in such a position that the pole 21b (Figure 16(a)) is coincident with node at dl to d4. Then, when high-frequency voltage signals having phases different by 900 are again applied to the electrode patterns 4b and 4d and the electrode patterns 4a and 4c, a travelling wave is oscillated in such a manner that the wave is transferred from el to e2 (Figure 16(e)) in the vibrator member 3, so that the rotor 2 having a plurality of poles as shown in Figure 16(a) is transported in a direction opposite to the wave propagation direction.

If the operations illustrated in Figures 16(b), 16(c), 16(d), 16(e) are repeated in this order the stepping angle of the rotor 2 may be reduced by a half to $\lambda/12$. If the wave number of the standing wave is selected to be three, then a stepping angle of 10° may be achieved without increasing the number of poles. When the size of the rotor is minimized, a very small stepping angle may be achieved with fewer poles.

In this preferred embodiment, there are four electrode patterns for each wavelength and by twenty four comb-like projecting portions of the vibrator member. If the wave number of the vibration is selected to be "λ" and "n" is selected to be a positive integer equal to one or more, the number of electrode patterns per wavelength is selected to be "2nλ", and the number of projecting portions for the vibrator member is a multiple of the subdivision number 2nλ of electrode patterns for the piezoelectric vibrator. If "n" is selected to be more than 1, then a smaller stepping angle may be achieved.

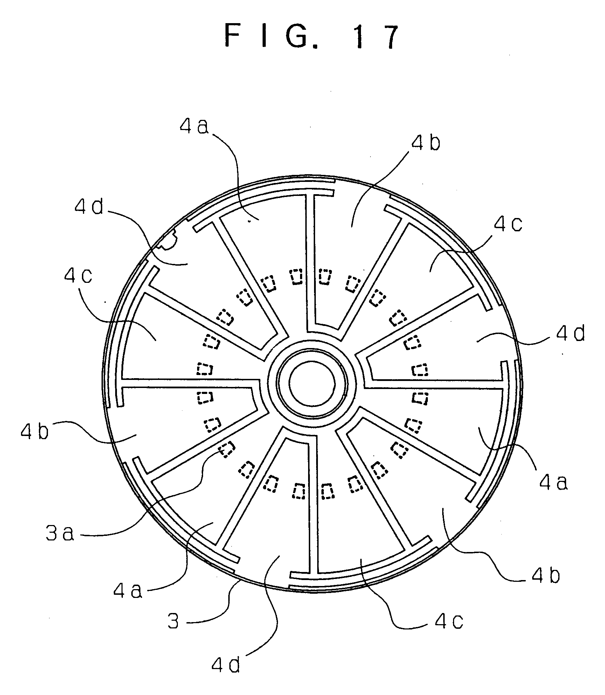

As, in the preferred embodiment, one wavelength is constructed of four divided electrode patterns 4a, 4b, 4c, 4d (Figure 17) and three waves can be oscillated circumferentially, the ultrasonic motor has twelve divided electrode patterns. Accordingly, in principle, twelve lead-wire connections are required. When the piezoelectric vibrator is made compact, there is a problem that when a large number of lead wires would be mounted, vibrations would be suppressed, resulting in lowering the performance of this ultrasonic motor. Thus, according to this preferred embodiment, only two lead wires are required by forming annular short circuit patterns internally and externally of the electrode patterns, thus joining alternate electrode patterns (Figure 17) with employment of the polarization-processed electrode patterns by +, +, -, - in this order at the inner peripheral and the outer peripheral of the piezoelectric vibrator 4.

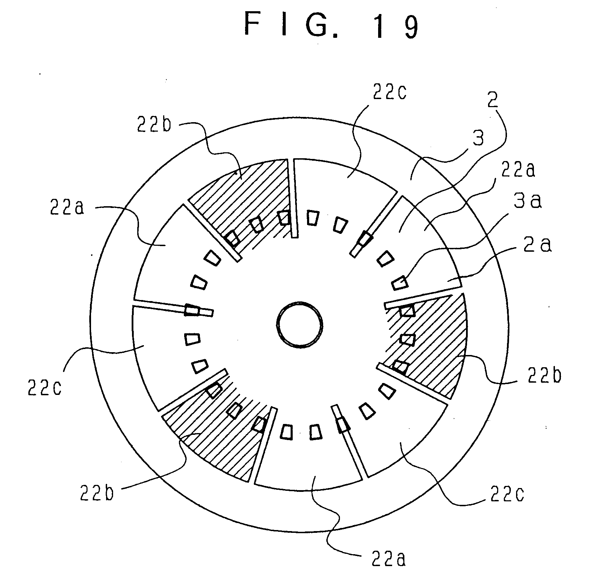

In a fifth embodiment of ultrasonic motor according to the present invention, the number of poles of the rotor 2 (Figure 19) is halved, as compared with the number of poles of the rotor in the fourth embodiment, so that there are nine poles 22a, 22b, 22c.

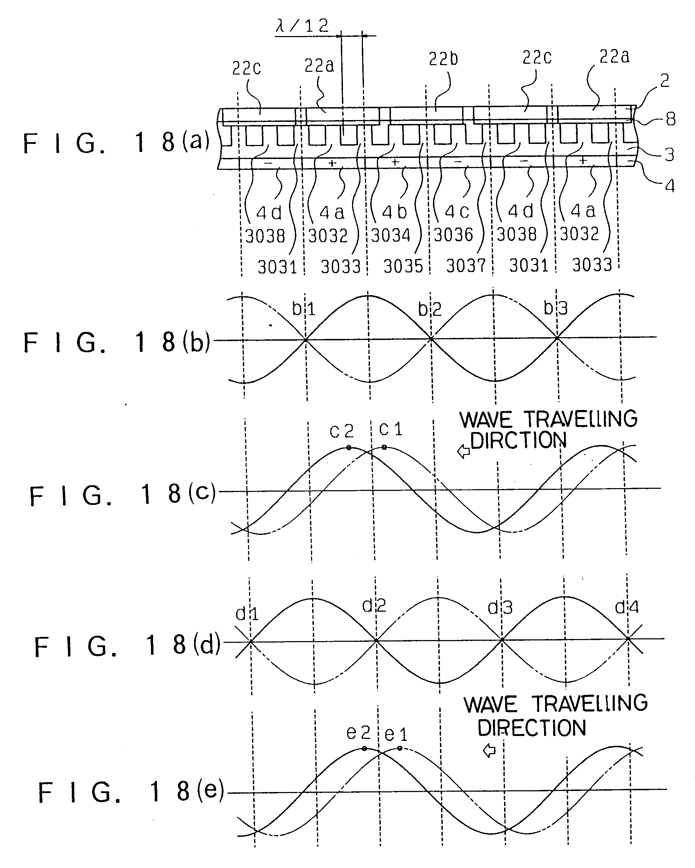

The vibrator member 3 (Figure 18(a)) is constructed in relation to the electrode patterns 4a to 4d of the vibrator 4, so that projecting portions are arranged over the nodes bl, b2, b3 (Figure 18(b)) and dl to d4 (Figure 18(d)) of the stopping standing waves.

When high-frequency voltage signals having the same phase are supplied to the electrode patterns 4a, 4b, 4c and 4d of the piezoelectric vibrator 4, and standing waves whose nodes appear at bl, b2, b3, (Figure 18(b)), are produced at the vibrator member 3, the pole 22b is stopped in a position in which its centre is aligned with the node b2 due to a balance in forces at the projecting portions 3034, 3035 and 3036 of the vibrating member. However, the poles 22a, 22b are not stopped at positions coincident with nodes, and the forces at projecting portions 3031, 3032, 3033 and 3037, 3038, 3031 of the vibrator member exerted on the poles 22a and 22c, respectively, are mutually opposite and cancel each other. As a result, the rotor 2 is stopped due to oscillation of the standing wave. If the operations producing the travelling wave and two sorts of standing waves illustrated in Figures 18(b), 18(c), 18(d), 18(e) are repeated in this order, a stepping angle of 10° can be achieved even when there are nine poles of the rotor.

The relative positions of the vibrator member 3 and the rotor 2 when the standing wave is oscillated are shown in Figure 19. Three poles 22b (shown hatched) are positioned at the nodes of the standing wave in the circumferential direction. As a result, although there is a possibility that the magnitude of the holding torque on the rotor 2 may vary during generation of the standing waves, a very small stepping angle is achieved with fewer poles than in the fourth embodiment.

In a sixth embodiment of the present invention, a minimum stepping angle of 60 is achieved, which gives sixty steps per revolution.

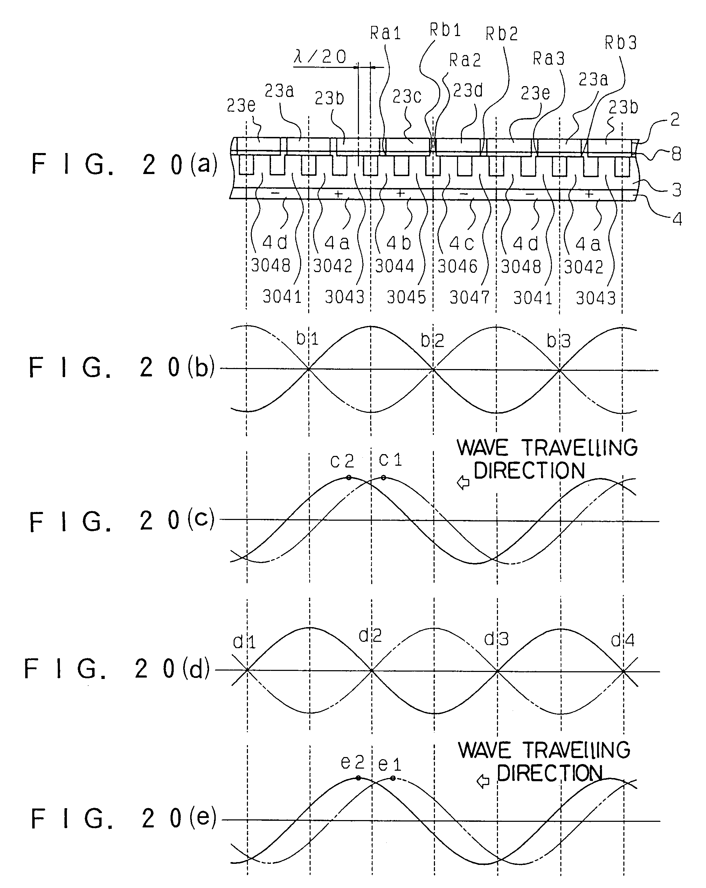

The rotor 2 (Figure 20(a)) has fifteen poles 23a to 23e at 24° spacings. The wave number of the standing waves is three. The vibrator member 3 is so constructed in relation to electrode patterns 4a to 4d of the vibrator 4 that the projecting portions 3041 to 3048 are spaced from the nodes b1, b2, b3 (Figure 20(b)) and dl to d4 (Figure 20(d)) of the stopping standing waves.

When high-frequency voltage signals are supplied to the electrode patterns 4a, 4b, 4c and 4d of the piezoelectric vibrator 4 to generate a standing wave whose nodes are present at bl, b2, b3 (Figure 20(b)) in the vibrator member 3, the poles 23a are positioned above the nodes bl, b3 by exerting the forces exerted on both side lower end portions Ra3 and Rb3 of the pole 23a. The gap between the poles 23c and 23d is positioned above the node b2, because the forces exerted on both ends of the side lower edge portions Ral and Rbl of the pole 23c and on the side lower end portions Rb2 and Ra2 of the pole 23d are opposite and cancel each other. As the forces exerted on the poles 23b and 23e also cancel each other, there is no resultant force to move the rotor. Accordingly, the rotor 2 is stopped by the oscillation of the standing wave (Figure 20(b)) with the poles 23a aligned with nodes b1 and b3.

The travelling wave (Figure 20(c)) is then applied to shift the rotor through 6°(λ/20). When high-frequency voltage signals phase shifted by 180° are supplied to the electrode patterns 4b and 4d of the piezoelectric vibrator 4 with respect to the electrode patterns 4a and 4c, thereby generating standing waves with nodes at d1 to d4 (Figure 20(d)) in the vibrator member 3, the poles 23b are aligned centrally with the nodes d2 and d4, and the slots between the poles 23d and 23e are aligned with the nodes d1 and d3. Thus the rotor 2 is stopped after a stepping angle of 6°. Further stepping is achieved by repeating the travelling wave and two sorts of standing waves indicated in Figures 2o(b), 20(c), 20(d), 20(e) in this order.

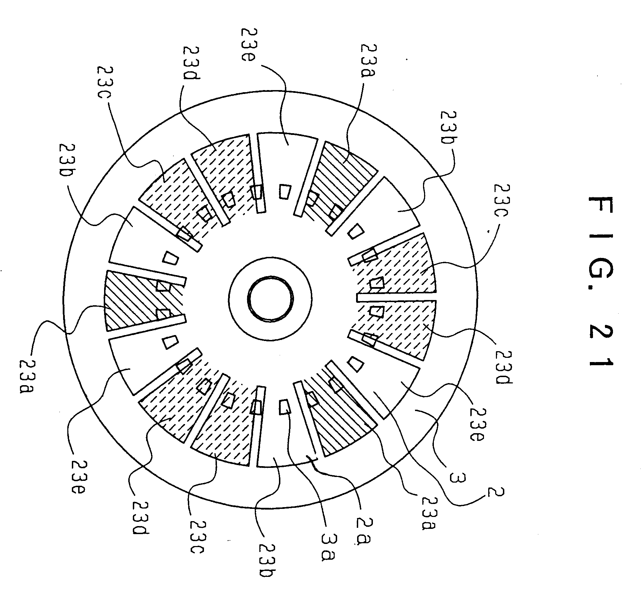

The three poles 23a shown hatched in Figure 21, are respectively aligned with nodes b1, b3 and b2 when stopped by standing wave shown in Figure 20(b). The slots between poles 23c and 23d shown in broken hatching are then aligned with nodes b2, b1 and b3. Thus a very small stepping angle can be achieved with fewer poles, and a stable stepping drive control can be achieved.

In a seventh embodiment ultrasonic motor according to the present invention, the total number of poles formed in the rotor is reduced below that of the sixth embodiment, and a minimum stepping angle of 60 is still achieved.

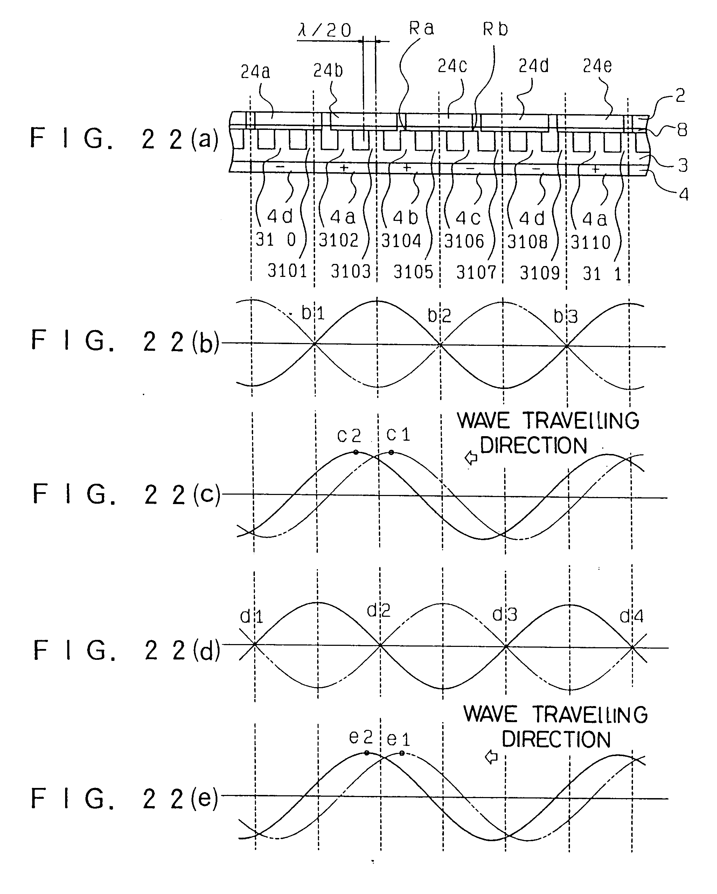

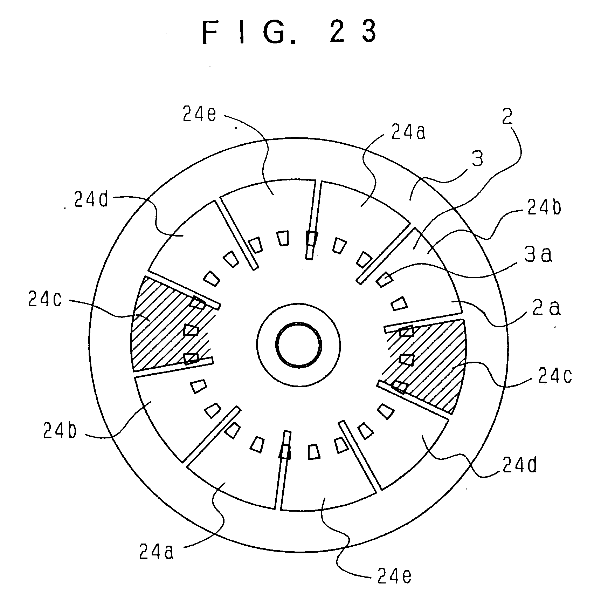

Ten poles 24a to 24e (Figure 23) of the rotor 2 are formed at equal intervals of 36°. The vibrator member 3 is arranged in relation to the electrode patterns of the vibrator 4 so that the projecting portions 3100 to 3111 are positioned over the nodes b1, b2, b3 (Figure 22(b)) and d1 to d4 (Figure 22(d)) of the stopping standing wave.

When high frequency voltage signals having the same phase are applied to the electrode patterns 4a, 4b, 4c, 4d of the piezoelectric vibrator 4 to produce standing waves at the vibrator member 3 with nodes bl, b2, b3 (Figure 22(b)), the poles 24c are aligned centrally with two of the six nodes. Under the influence of three projecting portions 3104, 3105, 3106 (Figure 22(a)), the forces exerted on both sides of the lower end side portions Ra, Rb stop the pole over the node. The forces exerted on the other poles (not hatched in Figure 23) cancel each other out.

A travelling wave (Figure 22(c)) follows and shifts the rotor 2 through 6° ($\lambda$/20) when high frequency voltage signals phase shifted by 1800 are applied to electrode patterns 4b, 4d, as compared with electrode patterns 4a, 4c. This produces stopping standing waves with nodes at d1 to d4 (Figure 22(d)). The poles 24b are centrally aligned with nodes, as shown in Figure 22(a) and 22(d) with node d2. The forces exerted on poles 24b stop the rotor whilst the forces exerted on the other poles not centrally aligned with nodes cancel each other out.

A travelling wave (Figure 22(d)) follows and shifts the rotor 2 through 6° again, when the same phase high frequency voltage signals (Figure 22(b)) are applied to the electrode patterns 4a to 4d. The poles 24a are aligned with nodes and the rotor 2 is stopped by the forces exerted thereon.

These operations are repeated in this order to achieve stepping in steps of 60, or sixty per revolution.

As thus far described, if there are at least two poles of the rotor which have been aligned with nodes of the standing waves, a stable stopping condition can be obtained when the standing waves are generated. The number of steps of the rotor per revolution may be expressed by the lowest common multiple of the number of poles on the rotor, and the total number of nodes of the standing waves. When the number of nodes in a standing wave is six, and two sorts of standing waves are switched the total number is twelve. The value of the minimum stepping angle is obtained by dividing 360° by that lowest common multiple. As a result, it is possible to obtain an arbitrary stepping angle by applying the above-explained relationship to each case. Preferably, the number of poles is equal to an integral denominator of 360.

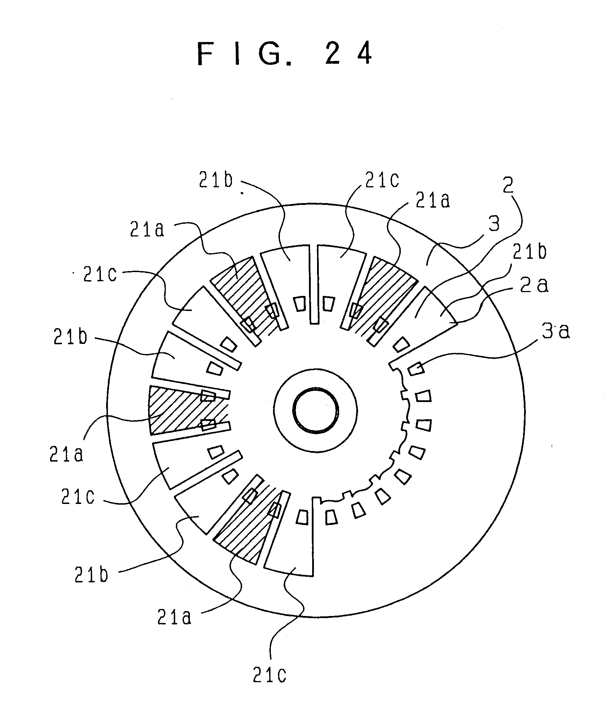

An eighth embodiment of ultrasonic motor according to the present invention, is similar to the first embodiment, but, as shown in Figure 24, several poles of the rotor have been dropped. In the specific example only six poles have been dropped from the rotor 2 which has twelve poles. Even in such a case, this rotor can be stopped with the poles 21a aligned with the nodes when the standing waves are generated.

The rotor has poles fabricated in such a manner that a space between successive poles is aligned with at least one node when the standing waves are generated, so that the rotor can be stepwise driven by the minimum stepping angle. Either poles are formed at other intervals, or a means having no relationship with the rotor may be constructed within a range where no pole is formed.

The present invention may be readily applied to a linear type ultrasonic motor. In this respect, it will be understood that the term "rotor" used in the claims is not limited to rotatable members, but rather to any moving member.

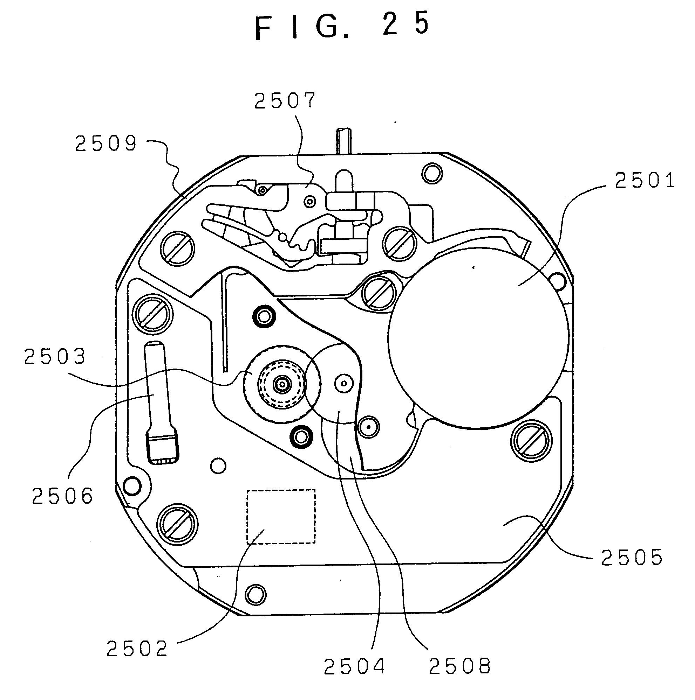

An example of an electronic apparatus equipped with an ultrasonic motor according to the present invention is an analog electronic timepiece (Figure 25). The timepiece has a main plate 2509 in which a stepping lever 2507, a yoke, a yoke holder and the like belonging to stepping mechanism components are assembled. On a circuit block 2505 secured to the main plate 2509 is an integrated circuit 2502 and a crystal oscillator 2506 used in an oscillating source. The integrated circuit 2502 is operable by a battery 2501. The integrated circuit 2502 includes an oscillating circuit, a dividing circuit, and a timing pulse generating circuit. In response to the output signal from the timing pulse generating circuit, a predetermined drive pulse is output to an ultrasonic motor 2503 mounted in the main plate 2509. The ultrasonic motor 2503 is rotated at a predetermined rotational speed through a preselected angle.

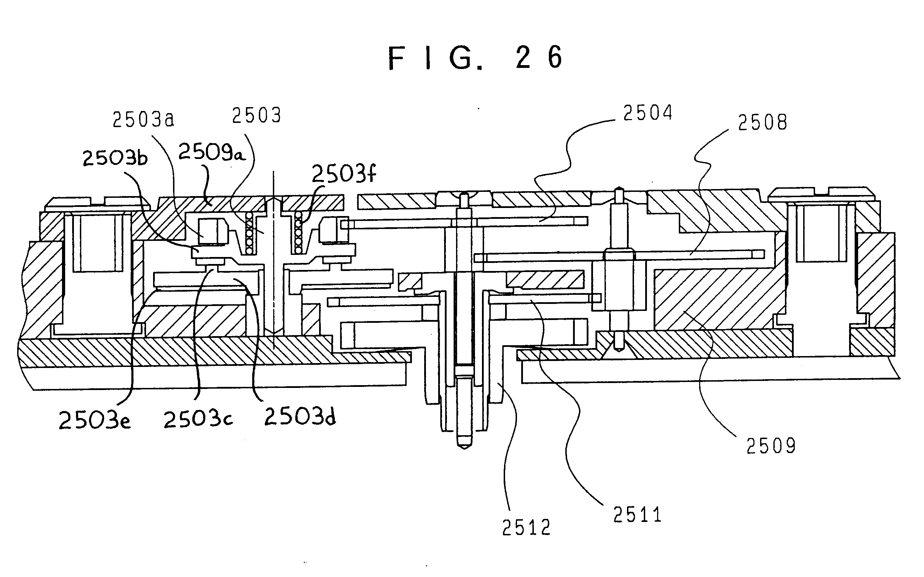

The ultrasonic motor 2503 (Figure 26) has a rotor with poles 2503b, which is rotatably mounted in the main plate 2509 and a back plate 2509a secured thereto. An output gear wheel 2503a is secured to the rotor. Under the rotor is a vibrator member 2503d with upwardly projecting portions 2503c. Under the vibrator member 2503d is a piezoelectric vibrator 2503e by which travelling and standing waves are generated. A spring 2503f between the rotor and the back plate 2509a acts as a pressure regulating means urging the rotor poles 2503b against the projecting portions 2503c with intervening friction members.

The gear wheel 2503a is in mesh with a seconds gear wheel 2504 rotatably mounted in the main frame of the timepiece and carrying a seconds indicating hand on a shaft. The ultrasonic motor 2503 is driven at such a speed and stepping angle that the gear wheel 2504 is stepped 6° every second. The shaft of the gear wheel 2504 also carries a pinion in mesh with another gear wheel 2508 rotatably mounted in the main frame. The gear wheel 2508 has a pinion on its shaft in mesh with a minutes gear wheel 2511 rotatably mounted upon the seconds gear wheel shaft and carrying a minutes indicating hand upon its shaft. The gear ratios of the pinions and gear wheels are such as to step the minutes gear wheel by 6° every minute. The minute gear wheel shaft carries a pinion in mesh with a gear train (not shown) to an hours gear wheel 2512 which is stepped 6° every ten minutes or 30° every hour, or rotated twice per day.

The integrated circuit 2502 has an output pulse changing circuit which supplies and interrupts supply of a properly designed drive pulse, or a properly designed stop pulse, as described hereinbefore.

As the ultrasonic motor of the analog electronic timepiece is accurately driven with very small stepping intervals, time instants can be correctly indicated. As the ultrasonic motor can be driven with a stepping angle of 60, the seconds gear wheel may be directly driven.

The ultrasonic motor according to the present invention has an ultrasonic vibration generating circuit for generating a travelling wave used to drive the rotor or moving member, whose vibration wave number is "$\lambda$" and also for generating either one sort, or more than two sorts of standing waves used to stop the rotor or moving member, a switching circuit for selecting either the travelling wave or one of the standing waves, and at least one piezoelectric vibrator driven by the ultrasonic vibration generating circuit. The rotor or moving member has a pole or inequality portion aligned with at least one of the nodes during an oscillation of the standing wave so that one pole or inequality portion is in contact with a projection portion or other inequality portion. As a result, the stepping angle of the rotor or moving member may be set to a smaller value than the stepwise movement of the nodes, of the standing wave by properly switching the travelling wave for driving the rotor or moving member and the standing wave for stopping the rotor or moving member.

Thus, when the ultrasonic motor according to the present invention is applied to electronic apparatus, this electronic apparatus can be driven in correct stepwise mode.

## Claims

1. An ultrasonic motor comprising a piezoelectric vibrator (4; 5, 6) having an electrode pattern (4a, 4b, 4c, 4d), a vibrator member (3) secured to the piezoelectric vibrator (4; 5, 6) and having projection portions (3a), and a rotor (2) having poles (2a) pressed into engagement, direct or indirect, with the projection portions (3a) by pressure regulating means (1), characterised by an ultrasonic vibration generating circuit (107; 206, 209; 1306, 1309) for generating a travelling wave whose vibration wave number is $\lambda$ and for generating a standing wave having a number of nodes, and a switching circuit (108; 207; 1307) for selecting either a travelling wave or a standing wave to drive the piezoelectric vibrator (4; 5, 6), whereby the rotor (2) is driven by expansion/compression movement of the piezoelectric vibrator (4; 5) to move when a travelling wave is supplied, and is stopped with at least one pole aligned with one node, when a standing wave is supplied by the vibrator (4; 6).

2. A motor according to claim 1, wherein the number of poles (2a) is greater than the number of nodes when the standing wave is oscillated, and the number of poles and the number of nodes have at least one common denominator which is a positive integer greater than 1.

3. A motor according to claim 1 or 2, wherein the ultrasonic vibration generating circuit (106; 209; 1309) generates two or more different sorts of standing waves for use in stopping the rotor (2).

4. A motor according to claim 1, 2 or 3, including

a smoothing circuit (1103) for converting an envelope of a crest value of a current waveform from the vibrator (1101) into either a continuous or a pulsatory signal (c),

a comparator circuit (1104) for detecting a rotation condition of the rotor (2) in response to the signal (c) derived from the smoothing circuit (1103) and issuing an output signal (d) to control operation of the switching circuit and ultrasonic vibration generating circuit to generate a standing wave to stop the rotor.

5. A motor according to any preceding claim wherein the number of poles (2a) of the rotor (2) is equal to an integral denominator of 360.

6. A motor according to any preceding claim wherein the poles (2a) of the rotor (2) are arranged at equal intervals around the rotor.

7. A motor according to any preceding claim, wherein the poles (2a) of the rotor (2) have elastic properties at right angles to the plane of movement of the rotor.

8. A motor according to any preceding claim, wherein the electrode pattern (4a, 4b, 4c, 4d) of the piezoelectric vibrator (4) is subdivided at equal intervals circumferentially, the number of subdivisions being selected to be $2n\lambda$ where n is a positive integer and the number of projection portions (3a) of vibrator member (3) is a multiple of the subdivision number $2n\lambda$.

9. A motor according to any preceding claim, including

a support (7) for the vibrator member (3) and output means (114; 225; 1325; 2503a) operable in response to operation of the motor (2).

10. An ultrasonic motor comprising a piezoelectric vibrator (4; 5, 6) having an electrode pattern (4a, 4b, 4c, 4d),

a vibrator member (3) fixed to the piezoelectric vibrator and having projection portions (3a),

a moving member (2) depressed to the vibrating member (3) and friction-driven by expansion/compression movement of the piezoelectric vibrator (4), the moving member (2) having such an inequality portion (2a) located in at least one of node portions during an oscillation of the standing wave in such a manner that one inequality portion is in contact with another inequality portion, pressure regulating means (113; 224; 1324) for contacting the moving member to the vibrator member in a pressure regulating manner, an ultrasonic vibration generating circuit for generating a travelling wave used to drive the moving member, whose vibration wave number is "$\lambda$" and also for generating either one sort, or more than one sort of standing wave used to stop the moving member, and a switching circuit for switching operation of the travelling wave and of the standing wave,

at least one piezoelectric vibrator being driven by the ultrasonic vibration generating circuit.

11. Electronic apparatus equipped with an ultrasonic motor according to claim 9.

# FIG. 1

EP 0 580 447 A1

# FIG. 2

POWER SOURCE —201

OSCILLATING CIRCUIT —202

DIVIDING CIRCUIT —203

TIMING PULSE GENERATING CIRCUIT —204

DRIVING PULSE STORAGE CIRCUIT —205

DRIVING PULSE GENERATING CIRCUIT —206

OUTPUT PULSE SELECTING CIRCUIT —207

PIEZOELECTRIC VIBRATOR DRIVING CIRCUIT —208

PIEZOELECTRIC VIBRATOR —221

VIBRATING MEMBER —222

PRESSURE REGULATING MEANS —224

MOVING MEMBER —223

DETECTION SIGNAL GENERATING CIRCUIT —232

STOPPING PULSE GENERATING CIRCUIT —209

STOPPING PULSE STORAGE CIRCUIT —210

CURRENT DETECTING CIRCUIT —231

OUTPUT MEANS —225

EP 0 580 447 A1

# F I G. 3

# F I G. 4 (a)

DRIVING DIRECTION
⇨

2a

3a

2

8

3

5

6

# F I G. 4 (b)

WAVE TRAVELLING DIRECTION
⇦

a2  a1

b2  b1

EP 0 580 447 A1

F I G. 5 (a)

λ/6  Ra  Rb

21a  21b  21c  21a  21b  21c  21a  21b

21c  2  8  3  5  6

3011 3013 3011 3013 3011 3013

3012 3014 3012 3014 3012 3014

c1  c2  c3

λ

F I G. 5 (b)

# F I G. 6

# F I G. 7

# F I G. 8

# F I G. 9

(a)

(b)

TIME

# FIG. 10

| SUBDIVISION NUMBER OF ELECTRODE PATTERN | COMB-LIKE PROJECTION NUMBER | NUMBER OF INEQUALITY PORTION | WAVE-NUMBER ／ROTATION |
|---|---|---|---|
| 1 2 | 2 2 | 1 5 | 6 |
| | | 1 6 | 1 6 |
| | 2 4 | 1 | 6 |
| | | 3 | 6 |
| | | 4 | 6 |
| | | 6 | 6 |
| | | 1 0 | 3 0 |
| | | 1 2 | 1 2 |
| | | 1 5 | 3 0 |
| | | 1 8 | 1 8 |
| | 2 5 | 0 | 6 |
| | | 1 5 | 6 |

F I G. 1 1

# F I G. 1 2

# FIG. 13

Block diagram showing:

POWER SOURCE — 1301 → OSCILLATING CIRCUIT — 1302 → DIVIDING CIRCUIT — 1303 → TIMING PULSE GENERATING CIRCUIT — 1304

DRIVING PULSE STORAGE CIRCUIT — 1305 → DRIVING PULSE GENERATING CIRCUIT — 1306 → OUTPUT PULSE SELECTING CIRCUIT — 1307 → PIEZOELECTRIC VIBRATOR DRIVING CIRCUIT — 1308 → PIEZOELECTRIC VIBRATOR — 1321 → VIBRATING MEMBER — 1322 → MOVING MEMBER — 1323 → OUTPUT MEANS — 1325

PRESSURE REGULATING MEANS — 1324

OUTPUT CHANGING SIGNAL GENERATING CIRCUIT — 1332

STOPPING PULSE GENERATING CIRCUIT — 1309 ← STOPPING PULSE STORAGE CIRCUIT — 1310

OUTPUT CHANGING TIMING STORAGE CIRCUIT — 1331

EP 0 580 447 A1

FIG. 14(a)

FIG. 14(b)

# F I G. 1 5

EP 0 580 447 A1

F I G. 1 6 (a)

F I G. 1 6 (b)

F I G. 1 6 (c)

F I G. 1 6 (d)

F I G. 1 6 (e)

# F I G. 1 7

FIG. 18(a)

FIG. 18(b)

FIG. 18(c)

FIG. 18(d)

FIG. 18(e)

# F I G. 1 9

F I G. 2 0 (a)

F I G. 2 0 (b)

F I G. 2 0 (c)

WAVE TRAVELLING DIRECTION

F I G. 2 0 (d)

WAVE TRAVELLING DIRECTION

F I G. 2 0 (e)

# F I G. 2 1

FIG. 22(a)

FIG. 22(b)

FIG. 22(c)

WAVE TRAVELLING
DIRECTION

FIG. 22(d)

FIG. 22(e)

WAVE TRAVELLING
DIRECTION

# F I G. 2 3

# F I G.  2 4

F I G. 2 5

# F I G.  2 6

2503a  2503  2504  2508

2503b  2509a  2503f

2503e  2503c  2503d

2509

2512  2511

EP 0 580 447 A1

# F I G. 2 7
## PRIOR ART

# FIG. 28
## PRIOR ART

# F I G. 2 9

MOVING MEMBER
2701a

STANDING WAVE 1

A  B  C  Ā  B̄  C̄  A  B  C

MOVING AMOUNT

STANDING WAVE 2

NODE   NODE   NODE

STANDING WAVE 3

NODE   NODE   NODE

41

EP 0 580 447 A1

**European Patent Office**

**EUROPEAN SEARCH REPORT**

Application Number

EP 93 30 5828

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 495 665 (SEIKO) | 1-2,5, 7-8, 10-11 | H01L41/09 |
| | * column 4, line 28 - column 8, line 14; figures 1-8 * | | |
| A | | 3-4,6,9 | |
| A | EP-A-0 416 884 (CANON) * the whole document * | 1-11 | |
| | | | **TECHNICAL FIELDS SEARCHED (Int. Cl.5)** |
| | | | H01L |

The present search report has been drawn up for all claims

| Place of search | Date of completion of the search | Examiner |
|---|---|---|
| BERLIN | 18 OCTOBER 1993 | MUNNIX S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C1)

42